# EUROPÄISCHE PATENTSCHRIFT

(11) **EP 3 837 590 B1**
(45) Veröffentlichungstag und Bekanntmachung des Hinweises auf die Patenterteilung: **10.04.2024**
(21) Anmeldenummer: 19748793.7
(22) Anmeldetag: 30.07.2019
(51) Int. Cl.: G05B 19/042, G08C 19/00, H04Q 9/00

(54) **FELDGERÄT DER AUTOMATISIERUNGSTECHNIK**
AUTOMATION FIELD DEVICE
APPAREIL DE TERRAIN DE LA TECHNIQUE DE L'AUTOMATISATION

(30) Priorität: 17.08.2018 DE 102018120108
(43) Veröffentlichungstag der Anmeldung: 23.06.2021
(73) Patentinhaber: Endress+Hauser SE+Co. KG, 79689 Maulburg (DE)
(72) Erfinder: SCHÄUBLE, Harald, 79541 Lörrach (DE); GERWIG, Simon, 79650 Schopfheim (DE); STRITTMATTER, Christian, 79736 Rickenbach (DE); BRUTSCHIN, Wolfgang, 79650 Schopfheim (DE)
(74) Vertreter: Laufer, Michael
(86) Internationale Anmeldenummer: PCT/EP2019/070465
(87) Internationale Veröffentlichungsnummer: WO 2020/035301

(56) Entgegenhaltungen:
- DE-A1-102016 122 714
- US-A1- 2017 167 911

## Beschreibung

Die Erfindung bezieht sich auf ein Feldgerät, insbesondere ein Namur-Feldgerät, der Automatisierungstechnik.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

Neben den oben bereits erwähnten Feldgeräten zählen aber auch sogenannte Namur-Feldgeräte bzw. Schaltgeräte, die bspw. als Grenzstandschalter ausgeführt sein können, zu der Liste der Feldgeräte. Derartige als Grenzstandschalter ausgebildete Feldgeräte, können beispielsweise vibronische Sensoren mit zumindest einer mechanisch schwingfähigen Einheit oder kapazitive und/oder konduktive Sensoren aufweisen. Die Grundprinzipien und unterschiedlichen Ausgestaltungen sind aus einer Vielzahl von Veröffentlichungen bekannt geworden. Entsprechende Feldgeräte werden von der Anmelderin in großer Vielfalt hergestellt und im Falle von vibronischen Grenzstandschaltern beispielsweise unter der Bezeichnung LIQUIPHANT und/oder SOLIPHANT, und im Falle von kapazitiven und/oder konduktiven Grenzstandschaltern beispielsweise unter der Bezeichnung LIQUIPOINT vertrieben.

Im Falle eines vibronischen Grenzstandschalters für Flüssigkeiten wird unterschieden, ob die schwingfähige Einheit von der Flüssigkeit bedeckt ist oder frei schwingt. Diese beiden Zustände, der Freizustand und der Bedecktzustand, werden dabei anhand unterschiedlicher Resonanzfrequenzen, also einer Frequenzverschiebung, unterschieden. Die Dichte und/oder Viskosität wiederum lassen sich mit einem derartigen Messgerät nur bei einer zumindest teilweisen Bedeckung mit dem Medium ermitteln.

Im Falle eines konduktiven Grenzstandschalters wird dagegen erkannt, ob über ein leitfähiges Medium ein elektrischer Kontakt zwischen einer Sondenelektrode und der Wandung eines leitfähigen Behälters oder einer zweiten Elektrode besteht. Im kapazitiven Messverfahren wird dagegen der Füllstand aus der Kapazität des von einer Sondenelektrode und der Wandung des Behälters oder einer zweiten Elektrode gebildeten Kondensators ermittelt. Je nach Leitfähigkeit des Mediums bildet entweder das Medium selbst oder eine Sondenisolierung das Dielektrikum des Kondensators.

Die sogenannten Namur-Feldgeräte bzw. Schaltgeräte wurden zuerst im NAMUR (Normenarbeitsgemeinschaft für Mess- und Regeltechnik in der Chemischen Industrie) Arbeitsblatt NA 001 definiert, welches in die Norm DIN EN 60947-5-6 (mit Ausgabedatum: Dezember 2000) überführt wurde. Namur-Feldgeräte bzw. Schaltgeräte übertragen hierbei lediglich eine binäre Information in Form eines spezifischen Stromsignales. Beispielsweise geben Namur-Feldgeräte an, ob eine spezifischer Grenzstand erreicht ist.

Gemäß der Norm DIN EN 60947-5-6 ist vorgesehen, dass das Feldgerät mit einem eingeprägten Strom betrieben wird, sodass es direkt aus einer Stromschleife mit Energie versorgt wird. Dies ist möglich, da das Feldgerät im Betrieb einen maximalen Strombedarf benötigt, der kleiner ist als ein Wert des spezifischen Stromsignals. Man spricht dann auch von sogenannten Zweileiter-Feldgeräten, da zum Anschluss der Geräte lediglich eine Zweidrahtleitung, d.h. eine Leitung mit zwei Adern, erforderlich ist. Die binäre Information (z.B. Grenzstand erreicht bzw. nicht erreicht) wird jeweils über einen entsprechenden spezifischen Stromwert von dem Feldgerät zu einer (analogen) Auswerteeinheit, bspw. einer SPS (Speicherprogrammierbaren Steuerung), kommuniziert. Gemäß der oben bezeichneten Norm sind als spezifische Stromwerte dabei ein Stromwert kleiner 1,2 mA und ein Stromwert größer 2,1 mA vorgesehen. In dem Fall eines Grenzstandschalters bedeutet dies, dass ein spezifischer Stromwert kleiner 1,2 mA signalisiert, dass der entsprechende Grenzstand erreicht ist und ein spezifischer Stromwert größer 2,1 mA signalisiert, dass der Grenzstand noch nicht erreicht ist.

Aufgrund dessen, dass dem Feldgerät nur eine begrenzte Leistung zur Verfügung steht, werden an die Konzeption und den Aufbau des Feldgerätes höchste Anforderungen gestellt. Dies trifft insbesondere in dem Fall zu, dass das Feldgerät neben der reinen internen Auswerteeinheit, die bspw. zur Ermittlung des Grenzstandes dient, auch weitere Funktionen verfügen soll, die über entsprechende elektronische Komponenten realisiert werden.

Eine solche Funktion kann dabei eine Funkfunktionalität des Feldgerätes darstellen, mittels derer bspw. der Grenzstand zusätzlich über ein entsprechendes Funksignal kommuniziert werden kann. Funksysteme benötigen dabei zeitweise sehr viel mehr Energie als das Feldgerät über die Zweidrahtleitung zur Verfügung stellen kann, bspw. in einem entsprechenden Funkintervall, in dem der Mess- bzw. Grenzwert kommuniziert wird. Aber nicht nur im Fall des Übertragens des Mess- bzw. Grenzwertes, sondern bspw. auch bei einem Softwareupdate, welches "over the air" durchgeführt wird, wird kurzfristig viel mehr Energie benötigt als das Feldgerät über die Zweidrahtleitung zur Verfügung stellen kann.

DE 10 2016 122714 A1 zeigt einen Adapter für einen Transmitters eines Feldgeräts. Der Adapter dient der, insbesondere drahtlosen, Kommunikation des Transmitters mit einer externen Einheit.

US 2017/167911 A1 zeigt ein Füllstandmessgerät in Form eines Laufzeitsensors nach Radar-, TDR- oder Ultraschallprinzip.

Der Erfindung liegt somit die Aufgabe zugrunde, ein Feldgerät der Automatisierungstechnik, insbesondere ein Namur-Feldgerät mit einer Zusatzfunktionalität, insbesondere eine Funkfunktionalität, bereitzustellen. Die Aufgabe wird erfindungsgemäß gelöst durch das Feldgerät, insbesondere das Namur-Feldgerät der Automatisierungstechnik gemäß Patentanspruch 1.

Das erfindungsgemäße Feldgerät, insbesondere Namur-Feldgerät, der Automatisierungstechnik umfasst:
- eine Anschlussklemme zum Anschließen einer Zweidrahtleitung;
- eine Feldgeräteelektronik, der eine maximale Betriebsleistung über die Anschlussklemme durch die Zweidrahtleitung zur Verfügung gestellt wird, wobei die Feldgeräteelektronik dazu eingerichtet ist, eine Hauptfunktionalität des Feldgerätes, insbesondere eine Mess- oder Grenzwerterfassung, auszuführen;
- eine durch die Feldgeräteelektronik bereitgestellte interne Schnittstelle zum Anschließen eines Elektronikmoduls;
- das Elektronikmodul mit zumindest einer elektronischen Komponente zur Realisierung einer Zusatzfunktionalität, wobei die zumindest eine elektronische Komponente des Elektronikmoduls über die interne Schnittstelle mit der Feldgeräteelektronik zur Datenübertragung verbunden ist und die interne Schnittstelle der zumindest einen elektronischen Komponente ferner eine Hauptleistung zur Verfügung stellt,
- eine dem Elektronikmodul zugehörige Kapazität, die derartig ausgebildet ist, dass die Kapazität über die interne Schnittstelle geladen wird und in dem Fall, dass die zumindest eine Komponente des Elektronikmoduls einen über die Hauptleistung hinausgehenden Energiebedarf benötigt, der zumindest einer Komponente eine zusätzliche erste Hilfsenergie zur Verfügung stellt;
- eine dem Elektronikmodul zugehörige Batterie, die derartig ausgebildet ist, dass die Batterie in dem Fall, dass die zumindest eine Komponente des Elektronikmoduls einen über die Hauptleistung und die erste Hilfsenergie hinausgehenden Energiebedarf benötigt, der zumindest einen Komponente eine zweite Hilfsenergie zur Verfügung stellt, wobei die Kapazität und die Batterie derartig aufeinander abgestimmt sind, dass die Batterie der zumindest einen Komponente die zweite Hilfsenergie nur dann zur Verfügung stellt, wenn die Hauptleistung und die erste Hilfsenergie nicht zur Energieversorgung der zumindest einen Komponente ausreicht.

Hierbei ist unter einem Namur-Feldgerät ein Feldgeräte zu verstehen, welches gemäß der Norm DIN EN 60947-5-6 (mit Ausgabedatum: Dezember 2000) ausgebildet ist und somit eine binäre Information anhand von zwei unterschiedlichen spezifischen Stromwerten über die Zweidrahtleitung kommuniziert, wobei eine erste Information der binären Information, insbesondere die Information, dass der Grenzstand erreicht ist, über einen ersten spezifischen Stromwert kleiner 1,2 mA und eine zweite Information der binären Information, insbesondere die Information, dass der Grenzstand noch nicht erreicht ist, über einen zweiten spezifischen Stromwert größer 2,1 mA kommuniziert wird.

Eine vorteilhafte Ausgestaltung des Feldgerätes sieht vor, dass die zumindest eine Komponente ein Funkmodul umfasst, welches dazu eingerichtet ist, drahtlos Daten zu kommunizieren, und wobei die zumindest zweite Hilfsenergie vorzugsweise nur bei einem Sende- bzw. Empfangsvorgang das Funkmodul mit Energie versorgt.

Eine erfindungsgemäße Ausgestaltung des Feldgerätes sieht ferner vor, dass eine Strombegrenzungsschaltung, die an einem Eingang mit der internen Schnittstelle und an einem Ausgang mit der zumindest einer Komponente des Elektronikmoduls verbunden ist, dazu ausgebildet ist, einen Strom der über die interne Schnittstelle fließt auf einen spezifischen Stromwert zu begrenzen, und dass die Kapazität und die Batterie zwischen dem Ausgang der Strombegrenzungsschaltung und der zumindest einen Komponente angeordnet sind und derartig aufeinander abgestimmt sind, dass die Batterie der zumindest einen Komponente die zweite Hilfsenergie nur dann zur Verfügung stellt, wenn eine Ausgangsspannung an dem Ausgang der Strombegrenzungsschaltung unter einen spezifischen Wert, vorzugsweise einen spezifischen Wert kleiner 3 V, besonders bevorzugt kleiner 2,75 V, besonders bevorzugt kleiner 2,5 V absinkt. Ergänzend kann die Ausgestaltung vorsehen, dass ein Regler in einer Verbindung zwischen der Batterie und dem Ausgang der Strombegrenzungsschaltung vorgesehen ist, der eine Batteriespannung auf einen Wert regelt, der kleiner als der spezifische Wert an dem Ausgang der Strombegrenzungsschaltung ist und/oder dass ferner ein Sperrelement, insbesondere in Form einer Diode oder als integraler Bestandteil des Reglers, in die Verbindung zwischen der Batterie und dem Ausgang der Strombegrenzungsschaltung vorgesehen ist, wobei das Sperrelement derartig ausgelegt ist, einen Stromfluss von dem Ausgang der Strombegrenzungsschaltung zur Batterie hin zu verhindern.

Eine weitere vorteilhafte Ausgestaltung des Feldgerätes sieht vor, dass die Kapazität eine Vielzahl von Keramikkondensatoren umfasst und die Kapazität vorzugsweise eine Größe im Bereich von 500 µF bis 2mF aufweist.

Eine weitere vorteilhafte Ausgestaltung des Feldgerätes sieht vor, dass die Batterie und die Kapazität parallel am Ausgang der Strombegrenzungsschaltung zueinander geschaltet sind.

Eine weitere vorteilhafte Ausgestaltung des Feldgerätes sieht vor, dass die Batterie gemäß dem Standard IEC 60086-4 mit Ausgabedatum vom 03.09.2014 und/oder dem Standard IEC 60079-11 mit Ausgabedatum vom 30.06.2011 ausgeführt ist, sodass die Batterie zum Einsatz in explosionsgefährdeten Bereich ausgebildet ist.

Eine weitere vorteilhafte Ausgestaltung des Feldgerätes sieht vor, dass die interne Schnittstelle zur Datenübertragung als UART-Schnittstelle ausgebildet ist.

Eine weitere vorteilhafte Ausgestaltung des Feldgerätes sieht vor, dass das Funkmodul zur drahtlosen Datenübertragung gemäß einem der folgenden Standards bzw. Protokollen oder einer davon abgewandelten Variante eingerichtet ist:
- Bluetooth oder Bluetooth Low Energy;
- 6 LoWPAN;
- 6TiSCH; oder
- Wireless HART.

Eine weitere vorteilhafte Ausgestaltung des Feldgerätes sieht ferner ein Feldgerätegehäuse vor, in dem die Feldgeräteelektronik und das Elektronikmodul angeordnet ist.

Eine alternative Ausgestaltung des Feldgeräts sieht ferner ein Feldgerätegehäuse vor, in dem die Feldgeräteelektronik angeordnet ist, wobei das Elektronikmodul außerhalb an dem Feldgerätegehäuse angeordnet ist.

Die Erfindung wird anhand der nachfolgenden Zeichnung näher erläutert. Es zeigt:

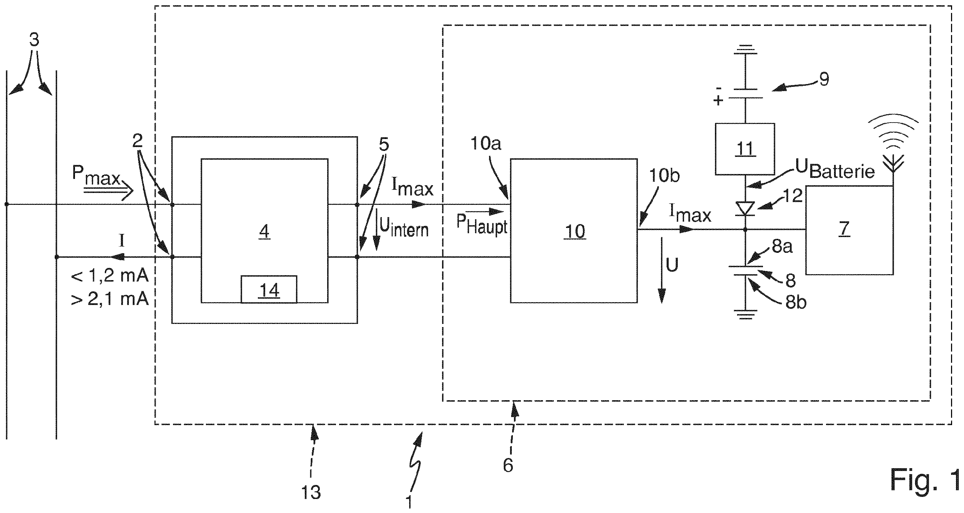

Fig. 1: eine erfindungsgemäße Ausgestaltung eines Feldgerätes der Automatisierungstechnik.

Figur 1 zeigt eine erfindungsgemäße Ausgestaltung eines Feldgerätes der Automatisierungstechnik 1. Bei dem in Figur 1 dargestellten Feldgerät 1 handelt es sich um ein Namur-Feldgerät, welches bspw. als Grenzstandschalter gemäß der Norm DIN EN 60947-5-6 (mit Ausgabedatum: Dezember 2000) ausgebildete ist. Derartige Namur-Feldgeräte 1 werden mit einem eingeprägten Schleifenstrom I über eine Zweidrahtleitung 3 mit Energie versorgt, sodass über die Zweidrahtleitung 3 neben der Messwertübertragung auch eine Energieversorgung des Feldgerätes 1 erfolgt, d.h. dass kein separates bzw. zusätzliches Netzteil zur Energieversorgung vorgesehen ist.

Um eine Hauptfunktionalität, bspw. das Erfassen eines spezifischen Grenzstandes und Übertragen des Grenzstandes in Form eines Messwertes, auszuführen, weist das Feldgerät eine innerhalb eines Feldgerätegehäuses 13 befindliche Feldgeräteelektronik 4 auf. Hierzu kann die Feldgerätelektronik 4 eine Sensoreinheit 14, die zum Erfassen einer Prozessgröße, insbesondere dem Erfassen des Grenzstandes, dient, aufweisen.

Die Sensoreinheit 14 kann die Prozessgröße mit einer Messrate f_{M} erfassen und ein davon abhängiges Prozessgrößensignal liefern, welches durch die Feldgeräteelektronik in ein ausgebbares Ausgangssignal übertragen wird.

Das erzeugte Prozessgrößensignal kennt nur zwei Zustände, die über die Zweidrahtleitung 3 übermittelt werden. Zum einen den Zustand, dass der Grenzstand erreicht ist und zum anderen den Zustand, dass der Grenzstand (noch) nicht erreicht ist. Entsprechend ist die Feldgeräteelektronik 4 dazu eingerichtet, als Ausgangssignal einen Stromwert von größer 2,1 mA über die Zweidrahtleitung 3 auszugeben, wenn die durch die Sensoreinheit erfassten Messwerte angeben, dass der Grenzstand noch nicht erreicht ist, und als Ausgangssignal ein Stromwert von kleiner 1,2 mA über die Zweidrahtleitung auszugeben, wenn die erfassten Messwerte angeben, dass der Grenzstand erreicht ist.

Damit die Feldgeräteelektronik 4 das Ausgangssignal über die Zweidrahtleitung 3 kommunizieren kann, ist eine Anschlussklemme 2 zum Anschließen der Zweidrahtleitung 3 vorhanden. Über die an die Anschlussklemme 2 angeschlossene Zweidrahtleitung 3 wird der Feldgerätelektronik 4 ferner eine maximale Betriebsleistung Pmax zur Verfügung gestellt, die dazu genutzt wird, sämtliche Komponenten, insbesondere die Sensoreinheit 14, die zur Durchführung der Hauptfunktionalität, insbesondere dem Erfassen des Grenzstandes und der Kommunikation eines entsprechenden Stromwertes, benötigt werden, mit Energie zu versorgen.

Ferner weist die Feldgeräteelektronik 4 eine interne Schnittstelle 5 auf, die derartig ausgebildet ist, dass ein Elektronikmodul 7 zur Realisierung bzw. Durchführung einer Zusatzfunktionalität, angeschlossen werden kann. Die interne Schnittstelle 5 kann dabei hinsichtlich der Datenübertragung zwischen dem Elektronikmodul 7 und der Feldgeräteelektronik 4 als UART-Schnittstelle (englisch für: Universal Asynchronous Receiver Transmitter), ausgebildet sein. Neben der Datenübertragung ist die interne Schnittstelle 5 ferner dazu ausgelegt, dem Elektronikmodul 7 eine Hauptleistung Phaupt zur Verfügung zu stellen. Hierfür ist die Feldgeräteelektronik 4 dazu eingerichtet, eine interne Spannung Uintern und einen internen Strom Imax, die zur Speisung des Elektronikmoduls 7 dienen, an der internen Schnittstelle bereitzustellen. Vorzugsweise ist die Feldgeräteelektronik 4 derartig ausgebildet, dass an der internen Schnittstelle 5 eine maximale interne Spannung Uintern von ca. 3 V zur Verfügung steht.

Zur Realisierung einer Funkfunktionalität als Zusatzfunktionalität weist das Feldgerät 1 ein innerhalb des Feldgerätegehäuses 13 angeordnetes Elektronikmodul 6 mit einer Funkeinheit 7 auf. Die Funkeinheit 7 kann hierbei zur drahtlosen Datenübertragung gemäß einem der folgenden Standards bzw. Protokollen oder einer davon abgewandelten Variante eingerichtet sein:
- Bluetooth oder Bluetooth Low Energy;
- 6 LoWPAN;
- 6TiSCH; oder
- Wireless HART.

Um für einen Sende- bzw. Empfangsvorgang der Funkeinheit ausreichend Energie bereitstellen zu können, weist das Elektronikmodul 6 ferner eine Kapazität 8 auf, die der Funkeinheit 7 eine erste Hilfsenergie Ehilf1 zur Verfügung stellt. Die Kapazität 8 kann bspw. einen Wert im Bereich von 800 µF bis 1,6 mF aufweisen. Ferner ist die Kapazität 8 vorzugsweise in Form eines Kondensators ausgebildet. Der Kondensator ist dabei derartig verschaltet, dass dieser über die interne Schnittstelle 5 von der Feldgerätelektronik 4 geladen wird und in dem Fall, dass die Funkeinheit 7 bei dem Sende- bzw. Empfangsvorgang einen über die Hauptleistung Phaupt hinausgehenden Energiebedarf benötigt, die Funkeinheit 7 zusätzlich mit der ersten Hilfsenergie Philf1 versorgt. Beispielsweise kann der Kondensator mit einer ersten Elektrode 8a an die Funkeinheit 7 und mit einer zweiten Elektrode 8b an Masse angeschlossen sein. Es versteht sich von selbst, dass die Kapazität 8 auch durch eine Vielzahl von Kondensatoren gebildet werden kann, die entsprechend verschaltet sind. Um den Platzbedarf für die Kapazität 8 auf dem Elektronikmodul 6 möglichst gering zu halten, wird die Kapazität 8 bevorzugt aus einer Vielzahl von keramischen Kondensatoren gebildet, die bspw. jeweils eine Einzelkapazität von 100 µF aufweisen und so verschaltet sind, dass sich eine Kapazitätswert im Bereich von 500 µF bis 2 mF, bevorzugt im Bereich von 800 µF bis 1,6 mF ergibt.

Das Elektronikmodul 6 weist ferner eine Strombegrenzungsschaltung 10 auf, die dazu eingerichtet ist, den Stromfluss über die interne Schnittstelle 5 auf einen maximalen Stromwert Imax, bspw. von ca. 0,8 mA zu begrenzen. Durch die Begrenzung des Stromes, wird eine über die interne Schnittstelle durch die Feldgeräteelektronik zur Verfügung gestellte maximale Hauptleistung auf einen Höchstwert, bspw. von ca. 2,4 mW (= Uintern * Imax = 3 V * 0,8 mA) begrenzt. Die Strombegrenzungsschaltung 10 ist ferner derartig elektrisch verschaltet, dass ein Eingang 10a mit der internen Schnittstelle 5 und ein Ausgang der Strombegrenzungsschaltung 10b mit der ersten Elektrode 8a und der Funkeinheit 7 verbunden ist, sodass am Ausgang der Strombegrenzungsschaltung 10b eine Spannung U mit einem vorgegebenen Wert, bspw. einem Wert kleiner 3 V, bevorzugt einem Wert aus dem Bereich 2,5 bis kleiner 3 V anliegt.

Erfindungsgemäß ist ferner eine dem Elektronikmodul 6 zugehörige Batterie 9 vorgesehen, die vorzugsweise Teil des Elektronikmoduls 6 ist. Die Batterie 9 ist dabei derartig ausgebildet, dass diese in dem Fall, dass das Funkmodul 7 kurzfristig, bspw. bei einem Sende- bzw. Empfangsvorgang, einen über die Hauptleistung Phaupt und die erste Hilfsenergie Ehilf1 hinausgehenden Energiebedarf benötigt, dem Funkmodul 7 eine zweite Hilfsenergie Ehilf2 zur Verfügung stellt. Hierbei ist das Elektronikmodul 6 derartig ausgebildet, dass die Batterie 9 dem Funkmodul 7 die zweite Hilfsenergie Philf2 ausschließlich dann zur Verfügung stellt, wenn die Hauptleistung Phaupt und die erste Hilfsenergie Ehilf1 nicht zur Energieversorgung der zumindest einen Komponente 7 ausreichen. Dies kann bspw. dadurch realisiert werden, dass die Batterie 9 über einen Regler 11, der eine Batteriespannung UBatterie auf einen kleineren Wert als die Spannung am Ausgang der Strombegrenzungsschaltung 10b regelt, mit dem Ausgang der Strombegrenzungsschaltung 10b verbunden ist, sodass die Batterie 9 die zweite Hilfsenergie Ehilf2 nur dann zur Verfügung stellt, wenn aufgrund eines erhöhten Energiebedarfs des Funkmoduls die Spannung U am Ausgang der Strombegrenzungsschaltung 10b abfällt. Dadurch, dass die Spannung für das Funkmodul auf eine höheren Wert als die Batteriespannung nach dem Regler UBatterie eingestellt ist, findet bei einem Abfall der Ausgangsspannung U eine automatische Unterstützung der Energieversorgung des Funkmoduls durch die Batterie statt.

Um einen ungewollten Stromfluss in Richtung der Batterie 9 zu verhindern, kann ferner vorgesehen sein, dass ein Sperrelement 12, bspw. eine Diode, zwischen den Regler 11 und dem Ausgang der Strombegrenzungshaltung 10b eingebracht ist. Alternativ kann das Sperrelement 12 auch als ein integraler Bestandteil des Reglers 11 ausgebildet sein.

Durch die erfindungsgemäße Beschaltung des Funkmoduls ist es möglich, Energiespitzen aufgrund eines kurzzeitig bzw. zeitweise erhöhten Energiebedarfs abzufangen. Hierbei wird die Hilfsenergie der Batterie Ehilf 2 nur dann verwendet, wenn intern mehr Energie benötigt wird als durch die Zweidrahtleitung und der Kapazität zur Verfügung steht bzw. gestellt werden kann, sodass keine dauerhafte Belastung der Batterie erfolgt.

### Bezugszeichenliste

- 1: Feldgerät der Automatisierungstechnik
- 2: Anschlussklemme
- 3: Zweidrahtleitung
- 4: Feldgeräteelektronik
- 5: Interne Schnittstelle
- 6: Elektronikmodul
- 7: Elektronische Komponente, insbesondere Funkeinheit
- 8: Kapazität
- 8a: Erste Elektrode
- 8b: Zweite Elektrode
- 9: Batterie
- 10: Strombegrenzungsschaltung
- 10a: Eingang der Strombegrenzungsschaltung
- 10b: Ausgang der Strombegrenzungsschaltung
- 11: Regler
- 12: Sperrelement
- 13: Feldgerätegehäuse
- 14: Sensoreinheit
- Ehilf1: Erste Hilfsenergie, die durch die Kapazität bereitgestellt wird
- Ehilf2: Zweite Hilfsenergie, die durch die Batterie bereitgestellt wird
- I: Strom, der durch die Zweidrahtleitung dem Feldgerät zugeführt wird
- Imax: Maximaler interner Strom, der zur Speisung des Elektronikmoduls zur Verfügung steht
- U: Ausgangsspannung an der Strombegrenzungsschaltung
- Uintern: Spannung an der internen Schnittstelle
- UBatterie: Spannung die an der Batterie oder ggfl. zwischen Regler und Sperrelement anliegt
- Pmax: maximale Betriebsleistung, die durch die Zweidrahtleitung dem Feldgerät zur Verfügung gestellt wird
- Phaupt: Hauptleistung die über die interne Schnittstelle zur Verfügung gestellt wird

## Patentansprüche

1. Feldgerät der Automatisierungstechnik (1), aufweisend:
- eine Anschlussklemme (2) zum Anschließen einer Zweidrahtleitung (3);
- eine Feldgeräteelektronik (4), der eine maximale Betriebsleistung (Pmax) über die Anschlussklemme (2) durch die Zweidrahtleitung (3) zur Verfügung gestellt wird, wobei die Feldgeräteelektronik (4) dazu eingerichtet ist, eine Hauptfunktionalität des Feldgerätes, insbesondere eine Mess- oder Grenzwerterfassung, auszuführen;
- eine durch die Feldgeräteelektronik (4) bereitgestellte interne Schnittstelle (5) zum Anschließen eines Elektronikmoduls (6);
- das Elektronikmodul (6) mit zumindest einer elektronischen Komponente (7) zur Realisierung einer Zusatzfunktionalität, wobei die zumindest eine elektronische Komponente (7) des Elektronikmoduls (6) über die interne Schnittstelle (5) mit der Feldgeräteelektronik (4) zur Datenübertragung verbunden ist und die interne Schnittstelle (5) der zumindest einen elektronischen Komponente (7) ferner eine Hauptleistung (Phaupt) zur Verfügung stellt;
- eine dem Elektronikmodul (6) zugehörige Kapazität (8), die derartig ausgebildet ist, dass die Kapazität (8) über die interne Schnittstelle (5) geladen wird und in dem Fall, dass die zumindest eine Komponente (7) des Elektronikmoduls (6) einen über die Hauptleistung (Phaupt) hinausgehenden Energiebedarf benötigt, der zumindest einen Komponente (7) eine zusätzliche erste Hilfsenergie zur Verfügung stellt;
- eine dem Elektronikmodul (6) zugehörige Batterie (9), die derartig ausgebildet ist, dass die Batterie (9) in dem Fall, dass die zumindest eine Komponente (7) des Elektronikmoduls (6) einen über die Hauptleistung (Phaupt) und die erste Hilfsenergie hinausgehenden Energiebedarf benötigt, der zumindest einen Komponente eine zweite Hilfsenergie zur Verfügung stellt, wobei die Kapazität (8) und die Batterie (9) derartig aufeinander abgestimmt sind, dass die Batterie (9) der zumindest einen Komponente (7) die zweite Hilfsenergie nur dann zur Verfügung stellt, wenn die Hauptleistung (Phaupt) und die erste Hilfsenergie nicht zur Energieversorgung der zumindest einen Komponente (7) ausreicht;
- eine Strombegrenzungsschaltung (10), die an einem Eingang (10a) mit der internen Schnittstelle (5) und an einem Ausgang (10b) mit der zumindest einen Komponente (7) des Elektronikmoduls (6) verbunden ist, und dazu ausgebildet ist, einen Strom der über die interne Schnittstelle (5) fließt auf einen spezifischen Stromwert (Imax) zu begrenzen,
**dadurch gekennzeichnet, dass**
die Kapazität (8) und die Batterie (9) zwischen dem Ausgang (10b) der Strombegrenzungsschaltung (10) und der zumindest einen Komponente (7) angeordnet sind und derartig aufeinander abgestimmt sind, dass die Batterie (9) der zumindest einen Komponente (7) die zweite Hilfsenergie nur dann zur Verfügung stellt, wenn eine Ausgangsspannung (U) an dem Ausgang (10b) der Strombegrenzungsschaltung (10) unter einen spezifischen Wert absinkt.

2. Feldgerät der Automatisierungstechnik nach Anspruch 1, wobei die zumindest eine Komponente (7) ein Funkmodul umfasst, welches dazu eingerichtet ist, drahtlos Daten zu kommunizieren, und wobei die zumindest zweite Hilfsenergie vorzugsweise nur bei einem Sende- bzw. Empfangsvorgang das Funkmodul mit Energie versorgt.

3. Feldgerät der Automatisierungstechnik nach dem vorhergehenden Anspruch, wobei der spezifische Wert ein Wert kleiner 3 V, bevorzugt kleiner 2,75 V, besonders bevorzugt kleiner 2,5 V ist.

4. Feldgerät der Automatisierungstechnik nach dem vorhergehenden Anspruch, wobei ein Regler (11) in einer Verbindung zwischen der Batterie (9) und dem Ausgang (10b) der Strombegrenzungsschaltung (10) vorgesehen ist, der eine Batteriespannung (UBatterie) auf einen Wert regelt der kleiner als der spezifische Wert an dem Ausgang (10b) der Strombegrenzungsschaltung (10) ist.

5. Feldgerät der Automatisierungstechnik nach dem vorhergehenden Anspruch, wobei ferner ein Sperrelement (12), insbesondere in Form einer Diode oder als integraler Bestandteil des Reglers, in die Verbindung zwischen der Batterie und dem Ausgang (10b) der Strombegrenzungsschaltung (10) vorgesehen ist, welches derartig ausgelegt ist, einen Stromfluss von dem Ausgang (10b) der Strombegrenzungsschaltung (10) zur Batterie (9) hin zu verhindern.

6. Feldgerät der Automatisierungstechnik nach einem oder mehreren der vorhergehenden Ansprüche, wobei die Kapazität (8) eine Vielzahl von Keramikkondensatoren umfasst und die Kapazität (8) vorzugsweise eine Größe im Bereich von 500 µF bis 2mF aufweist.

7. Feldgerät der Automatisierungstechnik nach einem oder mehreren der vorhergehenden Ansprüche, wobei die Batterie (9) und die Kapazität (8) parallel am Ausgang (10b) der Strombegrenzungsschaltung (10) zueinander geschaltet sind.

8. Feldgerät der Automatisierungstechnik nach einem oder mehreren der vorhergehenden Ansprüche, wobei die interne Schnittstelle (5) zur Datenübertragung als UART-Schnittstelle ausgebildet ist.

9. Feldgerät der Automatisierungstechnik nach einem oder mehreren der vorhergehenden Ansprüche, wobei das Funkmodul (7) zur drahtlosen Datenübertragung gemäß einem der folgenden Standards bzw. Protokollen oder einer davon abgewandelten Variante eingerichtet ist:
- Bluetooth oder Bluetooth Low Energy;
- 6 LoWPAN;
- 6TiSCH; oder
- Wireless HART.

10. Feldgerät der Automatisierungstechnik nach einem oder mehreren der vorhergehenden Ansprüche, ferner umfassend ein Feldgerätegehäuse (13) in dem die Feldgeräteelektronik (4) und das Elektronikmodul (6) angeordnet ist.

11. Feldgerät der Automatisierungstechnik nach einem der Ansprüche 1 bis 9, ferner umfassend ein Feldgerätegehäuse (13) in dem die Feldgeräteelektronik (4) angeordnet ist, wobei das Elektronikmodul (6) außerhalb an dem Feldgerätegehäuse (13) angeordnet ist.

## Claims

1. An automation technology field device (1), comprising:
- A connection terminal (2) for connecting a two-wire cable (3);
- field device electronics (4) which provide a maximum operating power (Pmax) through the two-wire cable (3) via the connection terminal (2), wherein the field device electronics (4) are configured to perform a main function of the field device, in particular the detection of measured values or limit values;
- an internal interface (5) provided by the field device electronics (4) for connecting an electronic module (6);
- the electronic module (6) with at least one electronic component (7) for performing an additional function, wherein the at least one electronic component (7) of the electronic module (6) is connected to the field device electronics (4) via the internal interface (5) for data transfer, and wherein the internal interface (5) of the at least one electronic component (7) also provides a main power (Phaupt);
- a capacitance (8) associated with the electronic module (6), which is configured in such a way that the capacitance (8) is charged via the internal interface (5) and provides an additional first auxiliary power to the at least one component (7) in the event that the at least one component (7) of the electronic module (6) has an energy demand which exceeds the main power (Phaupt);
- a battery (9) associated with the electronic module (6), which is configured in such a way that the battery (9) provides a second auxiliary power to the at least one component (7) in the event that the at least one component (7) of the electronic module (6) has an energy demand which exceeds the main power (Phaupt) and the first auxiliary power, wherein the capacitance (8) and the battery (9) are adapted to each other in such a way that the battery (9) of the at least one component (7) only provides the second auxiliary power if the main power (Phaupt) and the first auxiliary power do not supply sufficient power to the at least one component (7);
- a current-limiting circuit (10), which is connected to the internal interface (5) at one input (10a) and to the at least one component (7) of the electronic module (6) at one output (10b), and is configured to limit a current which flows via the internal interface (5) to a specific current value (Imax),
**characterized in that** the capacitance (8) and the battery (9) are arranged between the output (10b) of the current-limiting circuit (10) and the at least one component (7) and are adapted to each other in such a way that the battery (9) of the at least one component (7) only provides the second auxiliary power if an output voltage (U) at the output (10b) of the current-limiting circuit (10) falls below a specific value.

2. The automation technology field device as claimed in claim 1, wherein the at least one component (7) comprises a radio module, which is configured to communicate data wirelessly, and wherein the at least second auxiliary power preferably only supplies power to the radio module during a sending and/or receiving process.

3. The automation technology field device as claimed in the preceding claim, wherein the specific value is a value less than 3 V, preferably less than 2.75 V, particularly preferably less than 2.5 V.

4. The automation technology field device as claimed in the preceding claim, wherein a controller (11) is provided in a connection between the battery (9) and the output (10b) of the current-limiting circuit (10), said controller regulating a battery voltage (UBatterie) to a value which is less than the specific value at the output (10b) of the current-limiting circuit (10).

5. The automation technology field device as claimed in the preceding claim, wherein a barrier element (12), in particular in the form of a diode or as an integral component of the controller, is also provided in the connection between the battery and the output (10b) of the current-limiting circuit (10), which is configured in such a way as to prevent a flow of current from the output (10b) of the current-limiting circuit (10) to the battery (9).

6. The automation technology field device as claimed in one or more of the preceding claims, wherein the capacitance (8) comprises a number of ceramic capacitors, and wherein the capacitance (8) preferably has a value in the range from 500 µF to 2 mF.

7. The automation technology field device as claimed in one or more of the preceding claims, wherein the battery (9) and the capacitance (8) are connected in parallel at the output (10b) of the current-limiting circuit (10).

8. The automation technology field device as claimed in one or more of the preceding claims, wherein the internal interface (5) for data transfer is designed as an UART interface.

9. The automation technology field device as claimed in one or more of the preceding claims, wherein the radio module (7) for wireless data transfer is configured in accordance with one of the following standards or protocols, or a variant derived therefrom:
- Bluetooth or Bluetooth Low Energy;
- 6 LoWPAN;
- 6TiSCH; or
- WirelessHART.

10. The automation technology field device as claimed in one or more of the preceding claims, further comprising a field device housing (13) in which the field device electronics (4) and the electronic module (6) are arranged.

11. The automation technology field device as claimed in one of claims 1 to 9, further comprising a field device housing (13) in which the field device electronics (4) are arranged, wherein the electronic module (6) is positioned on the outside of the field device housing (13).

## Revendications

1. Appareil de terrain de la technique d'automatisation (1), lequel appareil présente :
- une borne de raccordement (2) destinée au raccordement d'un câble 2 fils (3) ;
- une électronique d'appareil de terrain (4) à laquelle une puissance de fonctionnement maximale (Pmax) est fournie par le biais du câble 2 fils (3) via la borne de raccordement (2), l'électronique d'appareil de terrain (4) étant conçue pour exécuter une fonctionnalité principale de l'appareil de terrain, notamment une acquisition de mesures ou de seuils ;
- une interface interne (5) mise à disposition par l'électronique d'appareil de terrain (4), laquelle interface est destinée au raccordement d'un module électronique (6) ;
- le module électronique (6) avec au moins un composant électronique (7), lequel module est destiné à la réalisation d'une fonctionnalité supplémentaire, l'au moins un composant électronique (7) du module électronique (6) étant relié via l'interface interne (5) à l'électronique d'appareil de terrain (4) pour la transmission de données et l'interface interne (5) mettant en outre à disposition de l'au moins un composant électronique (7) une puissance principale (Phaupt) ;
- une capacité (8) associée au module électronique (6), laquelle capacité est conçue de telle sorte que la capacité (8) est chargée par l'intermédiaire de l'interface interne (5) et, dans le cas où l'au moins un composant (7) du module électronique (6) a besoin d'une énergie dépassant la puissance principale (Phaupt), met à la disposition de l'au moins un composant (7) une première énergie auxiliaire supplémentaire ;
- une batterie (9) associée au module électronique (6), laquelle batterie est conçue de telle sorte que la batterie (9) - dans le cas où l'au moins un composant (7) du module électronique (6) a besoin d'une énergie dépassant la puissance principale (Phaupt) et la première énergie auxiliaire - met à disposition de l'au moins un composant une deuxième énergie auxiliaire, la capacité (8) et la batterie (9) étant adaptées l'une à l'autre de telle sorte que la batterie (9) fournit la deuxième énergie auxiliaire à l'au moins un composant (7) uniquement si la puissance principale (Phaupt) et la première énergie auxiliaire ne suffisent pas à alimenter en énergie l'au moins un composant (7) ;
- un circuit de limitation de courant (10), lequel circuit est relié à une entrée (10a) à l'interface interne (5) et à une sortie (10b) à l'au moins un composant (7) du module électronique (6), et lequel circuit est conçu pour limiter un courant qui circule à travers l'interface interne (5) à une valeur de courant spécifique (Imax),
**caractérisé en ce que**
la capacité (8) et la batterie (9) sont disposées entre la sortie (10b) du circuit de limitation de courant (10) et l'au moins un composant (7), et laquelle capacité et laquelle batterie sont adaptées l'une à l'autre de telle sorte que la batterie (9) fournit la deuxième énergie auxiliaire à l'au moins un composant (7) uniquement lorsqu'une tension de sortie (U) à la sortie (10b) du circuit de limitation de courant (10) chute en dessous d'une valeur spécifique.

2. Appareil de terrain de la technique d'automatisation selon la revendication 1,
pour lequel l'au moins un composant (7) comprend un module radio, lequel est conçu pour communiquer des données sans fil, et
pour lequel l'au moins une deuxième énergie auxiliaire alimente de préférence le module radio en énergie uniquement lors d'une opération d'émission ou de réception.

3. Appareil de terrain de la technique d'automatisation selon la revendication précédente, pour lequel la valeur spécifique est une valeur inférieure à 3 V, de préférence inférieure à 2,75 V, de manière particulièrement préférée inférieure à 2,5 V.

4. Appareil de terrain de la technique d'automatisation selon la revendication précédente, pour lequel un régulateur (11) est prévu dans une connexion entre la batterie (9) et la sortie (10b) du circuit de limitation de courant (10), lequel régulateur régule une tension de batterie (UBatterie) à une valeur qui est inférieure à la valeur spécifique à la sortie (10b) du circuit de limitation de courant (10).

5. Appareil de terrain de la technique d'automatisation selon la revendication précédente, pour lequel en outre un élément de blocage (12) - notamment sous la forme d'une diode ou en tant que partie intégrante du régulateur - est prévu dans la connexion entre la batterie et la sortie (10b) du circuit de limitation de courant (10), lequel élément est conçu de telle sorte qu'il empêche un flux de courant de la sortie (10b) du circuit de limitation de courant (10) vers la batterie (9).

6. Appareil de terrain de la technique d'automatisation selon l'une ou plusieurs des revendications précédentes, pour lequel la capacité (8) comprend une pluralité de condensateurs céramiques et la capacité (8) présente de préférence une grandeur dans la gamme de 500 µF à 2 mF.

7. Appareil de terrain de la technique d'automatisation selon l'une ou plusieurs des revendications précédentes, pour lequel la batterie (9) et la capacité (8) sont connectées en parallèle l'une à l'autre à la sortie (10b) du circuit de limitation de courant (10).

8. Appareil de terrain de la technique d'automatisation selon l'une ou plusieurs des revendications précédentes, pour lequel l'interface interne (5) pour la transmission de données est conçue en tant qu'interface UART.

9. Appareil de terrain de la technique d'automatisation selon l'une ou plusieurs des revendications précédentes, pour lequel le module radio (7) est conçu pour la transmission de données sans fil selon l'une des normes ou l'un des protocoles suivants, ou une variante qui en est dérivée :
- Bluetooth ou Bluetooth Low Energy ;
- 6 LoWPAN ;
- 6TiSCH ; ou
- Wireless HART.

10. Appareil de terrain de la technique d'automatisation selon l'une ou plusieurs des revendications précédentes, lequel appareil comprend en outre un boîtier d'appareil de terrain (13) dans lequel sont disposés l'électronique d'appareil de terrain (4) et le module électronique (6).

11. Appareil de terrain de la technique d'automatisation selon l'une des
revendications1 à 9, lequel appareil comprend en outre un boîtier d'appareil de terrain (13) dans lequel est disposée l'électronique d'appareil de terrain (4), le module électronique (6) étant disposé à l'extérieur sur le boîtier d'appareil de terrain (13).
